# EUROPÄISCHE PATENTSCHRIFT

(11) **EP 0 632 955 B1**
(45) Veröffentlichungstag und Bekanntmachung des Hinweises auf die Patenterteilung: **22.04.1998**
(21) Anmeldenummer: 94250172.7
(22) Anmeldetag: 04.07.1994
(51) Int. Cl.: A01F 12/20

(54) **Selbstfahrende Erntemaschine**
Self-propelled harvester for harvesting delicate crops und as castor-oil seeds
Moissonneuse automotive pour la récolte de produits délicats tels que les graines de ricin

(30) Priorität: 06.07.1993 DE 9310379 U
(43) Veröffentlichungstag der Anmeldung: 11.01.1995
(73) Patentinhaber: Claas OHG beschränkt haftende offene Handelsgesellschaft, D-33426 Harsewinkel (DE); CENTRE NATIONAL DU MACHINISME AGRICOLE, DU GENIE RURAL, DES EAUX ET DES FORETS (CEMAGREF), F-92160 Antony (FR)
(72) Erfinder: Lyon, Claude, F-34170 Castelnau le Lez (FR); Barbe, Paul, F-34160 Beaulieu (FR)

(56) Entgegenhaltungen:
- DE-A- 4 010 504
- DE-B- 1 238 263
- GB-A- 579 135
- GB-A- 993 256
- US-A- 2 227 225
- US-A- 2 265 380
- US-A- 2 320 944
- US-A- 2 361 633

## Beschreibung

Die vorliegende Erfindung betrifft eine selbstfahrende Vorrichtung zum Ernten von empfindlichem Erntegut, beispielsweise Rizinuskapseln, die mit einem Dreschwerk ausgerüstet sind, welches im wesentlichen aus einer rotierend antreibbaren Dreschtrommel an deren Umfang mit im gleichen Winkelabstand zueinander sowie achsparallel zur Drehachse der Dreschtrommel Profilstäbe Haltern befestigt sind und einem dazu unterhalb ortsfest angeordnetem Dreschkorb ausgebildet ist, der an der der Dreschtrommel zugewandten Seite mit einem elastischen Belag versehen ist.

Aus der DE 40 10 504 A1 ist eine selbstfahrende Vorrichtung bekannt, bei der die Dreschtrommel mit auf der Umfangsfläche festgelegten Schlaglappen versehen ist, um die Rizinusbohnen zu entkapseln. Bei dieser an sich zufriedenstellend arbeitenden Vorrichtung hat es sich herausgestellt, daß die Kapseln entweder nicht zerstört oder die Kerne oder Bohnen beschädigt werden. Dies ist darauf zurückzuführen, daß die Wirkung der Schlaglappen auf der Fliehkraft beruht und demzufolge unkontrolliert erfolgt. Die Funktion dieser vorbekannten Vorrichtung ist deshalb beim Ernten von empfindlichen Erntegut nicht zufriedenstellend.

Aus der US 2,361,633 ist es bekannt, Metalldreschleisten mit einer Gummiauflage zu versehen, um den Körnerbruch zu verringern. Durch die Gummiauflage verfügt die Dreschleiste über eine geringe Elastizität. Da sich aber der sich unter der Gummiauflage befindliche Stahlkern unelastisch gegenüber den Druschfrüchten verhält, reicht die nur aus der Gummiauflage resultierende Elastizität nicht aus, um empfindliche Druschfrüchte schonend auszudreschen. In dieser Schrift wird zudem erläutert, daß die Gummiauflagen sehr schnell verschleißen, sodaß erkennbar ist, daß die hier vorgeschlagene Lösung zu keinem zufriedenstellenden Ergebnis führt und nach einer Lösung gesucht werden muß, die ein besseres Verschleißverhalten mit höherer Elastizität zeigt.

Der vorliegenden Erfindung liegt daher das Problem zugrunde, eine selbstfahrende Vorrichtung der eingangs näher bezeichneten Art in konstruktiv einfacher Weise so auszugestalten, daß bei in Frage kommenden Erntegütern sichergestellt ist, daß die äußeren Kapseln zwar zerstört, die inneren Kerne oder Bohnen jedoch unbeschädigt bleiben. Dies wird dadurch erreicht, daß die Profilstäbe als elastische Schlauchkörper mit im wesentlichen kreisförmigen Querschnitt ausgebildet sind.

Da nunmehr die äußere Begrenzung der Dreschtrommel durch die elastischen Schlauchkörper gebildet wird, ist eine schonende Behandlung sichergestellt. Da sie außerdem fest an den Haltern angeordnet sind, ist eine vorgegebene, kontrollierte Berührung mit den Kapseln gewährleistet, so daß die auf diese ausgeübte Schlagkraft die Kapseln mit Sicherheit zerstört, nicht aber die Bohnen beschädigt. Durch die Elastizität der elastischen Schlauchkörper ist auch noch erreicht worden, daß sie sich verformen können, wodurch die schonende Behandlung noch erhöht wird.
Diese Elastizität läßt sich besonders einfach erreichen, wenn die elastischen Schlauchkörper aus Schläuchen oder Rohren mit kreisringförmigem Querschnitt bestehen. Ferner ist die Befestigung an den Haltern besonders einfach. Damit die zu zerstörenden Kapseln sich auf der der Dreschtrommel zugewandten Seite des Dreschkorbes gleichmäßig verteilen können, ist zur Auflockerung vorgesehen, daß die elastischen Schlauchkörper sich wechselweise vom linken und rechten Stirnende bis in den mittleren Bereich erstrecken, wobei sich die freien Stirnenden der einander benachbarten elastischen Schlauchkörper, bezogen auf deren Länge, um einen geringen Betrag überlappen. Durch die Überlappung ist die Wirkung über die Gesamtbreite gegeben. Der Abstand von zwei elastischen Schlauchkörpern jeder Seite ist genauso groß oder annähernd genauso groß, wie der Außendurchmesser der elastischen Schlauchkörper.

Zur einfachen Befestigung der elastischen Schlauchkörper ist vorgesehen, daß jeder Halter im wesentlichen aus einem auf der Dreschtrommelwelle gelagerten Kettenrad und einer endlosen, in die Verzahnung eingreifenden Rollenkette gebildet ist, und daß zur Festlegung der elastischen Schlauchkörper an den Kettengliedern der Rollenkette Befestigungswinkel angesetzt sind.

Damit alle Kettenräder durch die Drehung der Dreschtrommel mitgenommen werden, ist vorgesehen, daß wenigstens zwei Kettenräder vorzugsweise die äußeren, in einer festen Verbindung mit der Dreschtrommelwelle stehen, und daß alle Kettenräder mit mindestens einer zur zentrischen Bohrung achsparallelen Durchsteckbohrung versehen sind, durch die eine Mitnahmestange gesteckt ist, die gegen axiale Verschiebung gesichert ist.

Zum einfachen Antrieb der Dreschtrommelwelle ist vorgesehen, daß zumindest auf ein Stirnende eine Antriebsscheibe drehfest aufgesetzt ist, die mit einem Antriebsflansch verschraubt ist. Der Antriebsflansch kann beispielsweise auf einen Antriebszapfen aufgekeilt sein. Um die äußeren Kettenräder mit der Dreschtrommelwelle in einfachster Weise antriebstechnisch zu koppeln, ist vorgesehen, daß sie mit der Antriebsscheibe fest verbunden sind. Dies könnte beispielsweise durch eine Verschraubung erfolgen, wobei auch die zur Verschraubung des Antriebsflansches mit der Antriebsscheibe benötigten Durchgangsschrauben verwendet werden.

Im folgenden soll die Erfindung anhand eines Ausführungsbeispieles und mehrerer dieses schematisch darstellender Figuren näher erläutert werden. Dabei zeigt:
- Figur 1: den vorderen Teil der erfindungsgemäßen Erntevorrichtung in perspektivischer Darstellung,
- Figur 2: den erntewirksamen Teil der in Figur 1 dargestellten Vorrichtung in der Seitenansicht,
- Figur 3: die Dreschtrommel in einem Teil-Längsschnitt und
- Figur 4: einen Schnitt längs der Linie IV in der Figur 3.

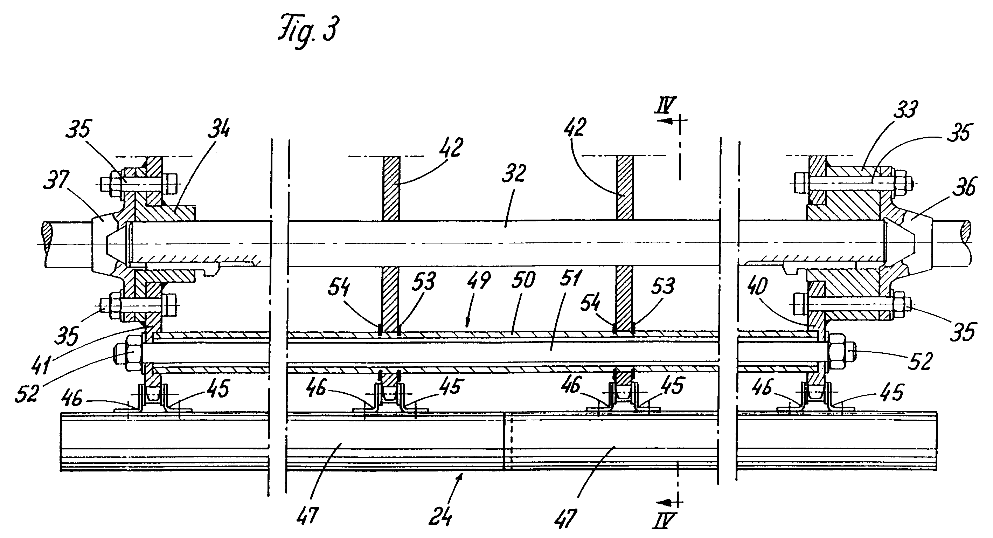

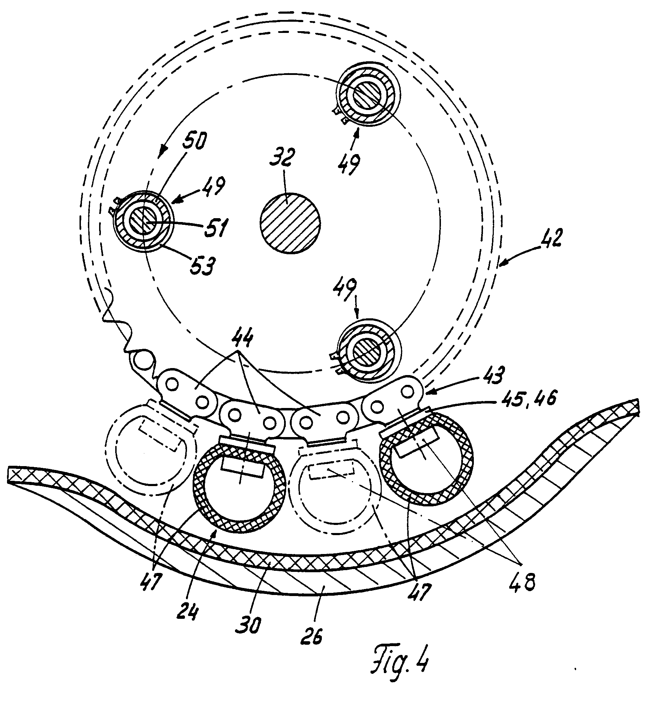

Mit 1 ist ein selbstfahrendes Trägerfahrzeug bezeichnet, mit dem wie in an sich bekannter Weise bei Mähdreschern, ein Schrägfördererkanal 2 verschwenkbar verbunden ist. Zu diesem Zweck ist eine Kolbenzylindereinheit 3 vorgesehen, dessen Kolbenstange 4 mit dem Schrägfördererkanal 2 und dessen Zylinder 5 mit dem vorderen Teil des Trägerfahrzeuges 1 verbunden ist. Im Förderkanal 2 sind Einzugsbänder 6 antreibbar gelagert, die mit quer zur Transportrichtung vorgesehenen Borstenreihen 7 bestückt sind. Stirnseitig mit dem Schrägförderer 2 ist über nicht dargestellte Schnellkupplungen eine Sammelmulde 8 verbunden, in welcher eine mit Borsten besetzte Transportschnecke 10 gelagert ist. Mit der dem Schrägfördererkanal 2 abgewandten Stirnseite der Sammelmulde 8 sind für jede Reiheneinheit ein Getriebegehäuse 11 schwenkbar verbunden. Zu diesem Zweck stützt sich eine hydraulische Kolbenzylindereinheit 12 zwischen der Sammelmulde 8 und dem Winkelgetriebegehäuse 11 ab. Letzteres weist eine Konsole 13 auf, in der ein um einen Bolzen 14 verschwenkbarer Rahmen 15 gelagert ist.

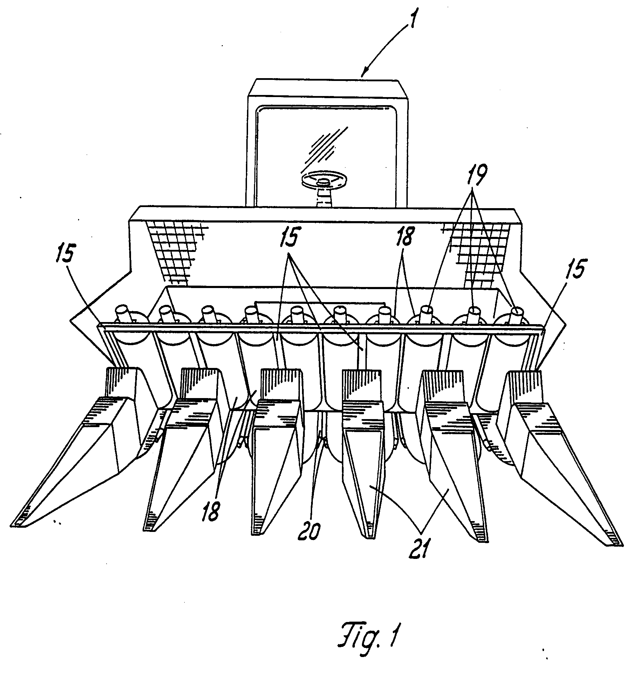

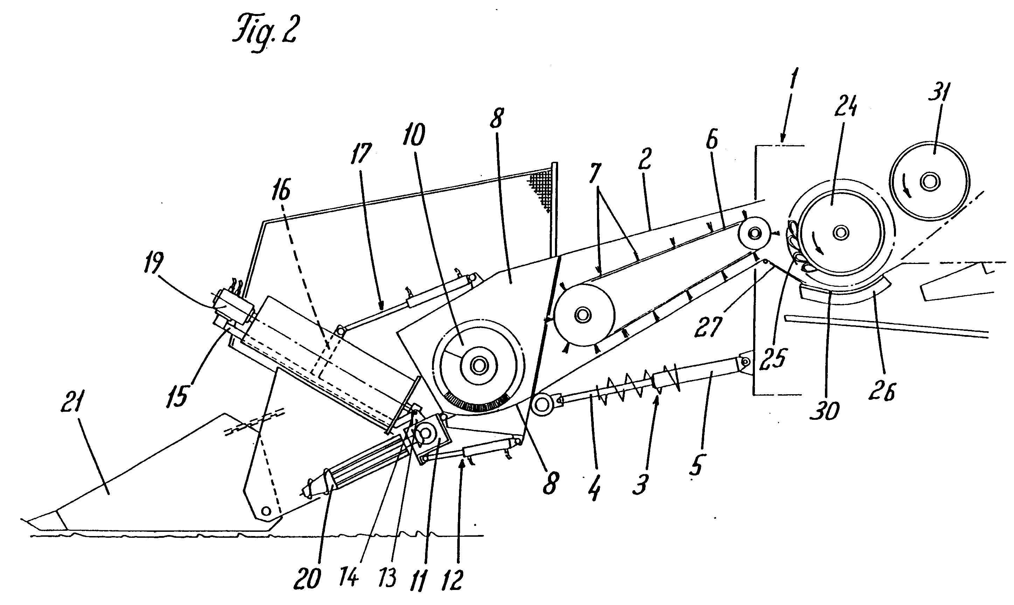

In Figur 2 ist angedeutet, daß dieser Rahmen 15 über einen Arm 16 mit einer Kolbenzylindereinheit 17 in Verbindung steht, die an der Sammelmulde 8 angelenkt ist. Auf diese Weise ist es möglich, den gesamten Rahmen um die Bolzen 14 zu verschwenken. Der Rahmen 15 selbst dient zur Aufnahme mehrerer Bürstenpaare 18, wobei jede Bürste beispielsweise über einen separaten Ölmotor 19 angetrieben ist. Unterhalb der Bürstenpaare 18 sind Einzugswalzen 20 vorgesehen, die einendig im Getriebegehäuse 11 antreibbar gelagert sind. Den Einzugswalzen 20 sind, wie bei Maiserntemaschinen bekannt, Halmteiler 21 vorgeordnet. Aus Figur 1 wird deutlich, daß jeweils einem Bürstenpaar 18 auch ein Einzugswalzenpaar 20 zugeordnet ist. Um ein einwandfreies Abbürsten der Rizinuskapseln von den Stengeln zu erreichen, greifen dabei die Borstenreihen zweier benachbarter Bürsten eines Bürstenpaares 18 ineinander.
Während des Betriebes der zuvor beschriebenen erfindungsgemäßen Vorrichtung werden die Rizinusstengel während der Vorfahrtbewegung des Trägerfahrzeugs 1 von den Einzugswalzen 20 ergriffen und nach unten auf den Acker gezogen, wobei gleichzeitig durch die Bürstenpaare 18 die Kapseln von den Stengeln gebürstet werden. Diese Kapseln werden dann in die Sammelmulde 8 geschleudert und von dort durch die Transportschnecke 10 dem Schrägförderer 2 zugeführt. Dieser transportiert die Rizinuskapseln zu der in den Figuren 3 und 4 genauer dargestellten Dreschtrommel 24. Der der Dreschtrommel 24 zugeordnete Dreschkorb 26 ist vollflächig ausgebildet und ist mit einem elastischen Belag 30 versehen. Der Zwischenraum zwischen dem Schrägfördererkanal 2 und dem Boden 26 ist durch ein glattes Übergabeblech 27 überbrückt, welches zum Boden 26 hin stark geneigt verläuft, um ein sicheres Abgleiten des kleinteiligen Dreschgutes zur Dreschtrommel hin zu gewährleisten. Die in dem aus dem Dreschkorb 26 und Dreschtrommel 24 gebildeten Dreschwerk aus den Kapseln ausgelösten Rizinusbohnen werden dann gemeinsam mit den aufgebrochenen Kapselteilen einer Übergabetrommel 31 und nicht näher dargestellten Reinigungsorganen übergeben. Um möglichst schonend auf die bruchempfindlichen Bohnen einzuwirken, ist der Mantel der Übergabetrommel 31 vollflächig, kreisrund ausgebildet und besteht gegebenenfalls aus elastischem Material.

Die Dreschtrommel 24 weist eine durchgehende Dreschtrommelwelle 32 auf, auf welcher beidendig Kuppelteile 33 und 34 drehfest aufgesetzt sind, mit denen mittels Schrauben 35 Lager- und Antriebsflansche 36 und 37 verbunden sind. Die Kuppelteile 33, 34 sind an den den Flanschen 36, 37 abgewandten Stirnseiten mit jeweils einem Bund versehen, auf denen Kettenräder 40, 41 aufgesetzt sind, die ebenfalls mittels der Schrauben 35 mit den Kuppelteilen 33, 34 fest verbunden sind. Zwischen den beiden Kettenrädern 40, 41 sind noch mehrere im gleichen Abstand zueinander angeordnete Kettenräder 42 auf die Dreschtrommelwelle 32 aufgesetzt, die jedoch nicht direkt mit der Dreschtrommelwelle 32 in einer Mitnahmeverbindung stehen. Über alle Kettenräder 40 bis 42 ist eine endlose Rollenkette 43 gelegt, die in die Umfangsverzahnung eingreift. An jedem Kettenglied 44 jeder Rollenkette 43 sind beidendig zwei Befestigungswinkel 45, 46 angenietet. An den fluchtend zueinander stehenden Befestigungswinkeln 45, 46 aller Rollenketten 43 sind elastische Schlauchkörper 47 in Form von Schlauch- oder Rohrstücken angeschraubt. Dazu liegt im Inneren jedes elastischen Schlauchkörpers 47 eine Gegenleiste 48. Im Ausführungsbeispiel gemäß den Figuren 3 und 4 erstrecken sich die elastischen Schlauchkörper 47 wechselweise von der linken und rechten Stirnseite aus in zur Drehachse der Dreschtrommel 24 achsparalleler Richtung bis in den mittleren Bereich hinein, indem sie sich um eine kurze Länge überlappen. Die Figur 4 zeigt, daß die Abstände zwischen den einzelnen elastischen Schlauchkörper 47 so groß sind, daß sie sich im mittleren Überlappungsbereich berühren, oder in einem geringen Abstand zueinander stehen. Die zwischen den äußeren Kettenrädern 40, 41 angeordneten Kettenräder 42 werden durch drei um einen Winkel von 120 ° versetzte Mitnahmestangen 49 in Drehung versetzt, da die Mitnahmestangen 44 durch zur zentrischen Bohrung achsparalle Durchsteckbohrungen gesteckt sind. Die Mitnahmestangen 49 sind mit ihren Stirnbereichen mit den äußeren Kettenrädern 40, 41 fest verbunden.

Jede Mitnahmestange 49 besteht aus einem Außenrohr 50 und einem inneren Rundstab 51, der an beiden Enden mit einem Gewinde versehen ist, um ihn mittels aufgedrehter Mutter 52 anzuziehen. Dazu sind die äußeren Kettenräder 40, 41 mit entsprechenden Bohrungen versehen. Damit die Kettenräder 40, 42 nicht verspannt werden, stützen sich die Stirnenden des Außenrohres 50 an den den Muttern 52 abgewandten Flächen der beiden Kettenräder 40, 41 ab. Im dargestellten Ausführungsbeispiel greifen die Stirnbereiche in Aussenkungen schließend ein. Die Sicherung gegen axiale Verschiebung der Kettenräder 42 erfolgt durch zwei beidseitig in Nuten jedes Außenrohres eingesetzte Sicherungsringe 53, 54.
Aus den Figuren 3 und 4 ergibt sich, daß die Kettenräder 40, 41 und 42 die umschlingenden Rollenketten 43 und die Befestigungswinkel 45, 46 die Halter für die Profilstäbe 47 bilden.
Im Ausführungsbeispiel ist der Dreschkorb 26 als undurchlässiger Boden ausgebildet, da auch der Belag 30 vollflächig ist. Ist der Dreschkorb 26 in Form eines Gitters ausgebildet, ist der elastische Belag 30 durchlässig.

## Patentansprüche

1. Selbstfahrende Vorrichtung zum Ernten von empfindlichem Erntegut, beispielsweise Rhizinuskapseln, die mit einem Dreschwerk ausgerüstet ist, welches im wesentlichen aus einer rotierend antreibbaren Dreschtrommel, an deren Umfang mit im gleichen Winkelabstand zueinander sowie achsparallel zur Drehachse der Dreschtrommel Profilstäbe auf Haltern befestigt sind, und einem dazu unterhalb ortsfest angeordneten Dreschkorb gebildet ist, der an der der Dreschtrommel zugewandten Seite mit einem elastischen Belag versehen ist,
**dadurch gekennzeichnet,**
daß die Profilstäbe als elastische Schlauchkörper (47) mit im wesentlichen kreisringförmigem Querschnitt ausgebildet sind.

2. Vorrichtung nach Anspruch 1,
**dadurch gekennzeichnet,**
daß die elastischen Schlauchkörper (47) sich wechselweise vom linken oder rechtern Stirnende bis in den mittleren Bereich erstrecken, wobei sich die freien Stirnenden der einander benachbarten elastischen Schlauchkörper (47), bezogen auf deren Länge, um einen geringen Betrag überlappen.

3. Vorrichtung nach Anspruch 1,
**dadurch gekennzeichnet,**
daß jeder Halter im wesentlichen aus einem auf der Dreschtrommelwelle (32) gelagerten Kettenrad (40, 41, 42) und einer endlosen, in die Verzahnung eingreifenden Rollenkette (43) gebildet ist und daß zur Festlegung der elastischen Schlauchkörper (47) an der Rollenkette (43) Befestigungswinkel (45, 46) angesetzt sind.

4. Vorrichtung nach Anspruch 3,
**dadurch gekennzeichnet,**
daß wenigstens zwei Kettenräder (40, 41, 42), vorzugsweise die äußeren Kettenräder (40, 41) in einer festen Verbindung mit der Dreschtrommelwelle (32) stehen und daß alle Kettenräder (40, 41, 42) mit mindestens einer zur zentrischen Bohrung achsparallelen Durchsteckbohrung versehen sind, durch die eine gegen axiale Verschiebung gesicherte Mitnahmestange (49) geführt ist.

5. Vorrichtung nach Anspruch 4,
**dadurch gekennzeichnet,**
daß die Mitnahmestange (49) an beiden Stirnenden mit jeweils einem Gewindezapfen versehen ist, auf die zur achsparallelen Sicherung Muttern (52) aufgeschraubt sind.

6. Vorrichtung nach Anspruch 4 und 5,
**dadurch gekennzeichnet,**
daß die Mitnahmestange (49) aus einem Außenrohr (50) und einem die Gewindezapfen aufweisenden, innerhalb des Außenrohres (50) liegenden Rundstab (51) gebildet ist und daß zur Positionierung der nicht in einer festen Verbindung mit der Dreschtrommelwelle (32) stehenden Kettenräder (40, 41, 42) das Außenrohr (50) an definierten Stellen mit paarweise angeordneten in Ringnuten eingesetzten Sicherungsringen (53, 54) versehen ist.

7. Vorrichtung nach Anspruch 6,
**dadurch gekennzeichnet,**
daß das Außenrohr (50) mit seinen Stirnendbereichen in Ausnehmungen der äußeren Kettenräder (40, 41) schließend eingreift.

8. Vorrichtung nach Anspruch 7,
**dadurch gekennzeichnet,**
daß die äußeren Kettenräder (40, 41) mit den Antriebsscheiben fest verbunden sind.

9. Vorrichtung nach einem oder mehreren der vorhergehenden Ansprüche,
**dadurch gekennzeichnet,**
daß die Kettenräder (42) drei um einen Winkel von 120 ° versetzte Durchsteckbohrungen aufweisen, durch die drei Mitnahmestangen (49) geführt sind.

## Claims

1. A self-propelled apparatus for harvesting delicate crop material, for example castor-oil capsules, provided with a threshing mechanism which is essentially formed from a rotatingly drivable thrashing drum, at the periphery of which profile bars are fixed on holders at the same angular spacing relative to each other and in axis-parallel relationship with respect to the axis of rotation of the thrashing drum, and a concave which is stationarily arranged below same and which is provided with an elastic covering at the side towards the thrashing drum, characterised in that the profile bars are in the form of elastic hose bodies (47) of a cross-section substantially in the form of a circular ring.

2. Apparatus according to claim 1 characterised in that the elastic hose bodies (47) extend alternately from the left-hand or right-hand end into the middle region, wherein the free ends of the mutually adjacent elastic hose bodies (47), with respect to the length thereof, overlap by a small amount.

3. Apparatus according to claim 1 characterised in that each holder is essentially formed from a chain wheel (40, 41, 42) mounted on the thrashing drum shaft (32) and an endless roller chain (43) which engages into the tooth configuration, and that angle securing members (45, 46) are fitted to the roller chain (43) for fixing the elastic hose bodies (47).

4. Apparatus according to claim 3 characterised in that at least two chain wheels (40, 41, 42), preferably the outer chain wheels (40, 41), are fixedly connected to the thrashing drum shaft (32) and that all chain wheels (40, 41, 42) are provided with at least one through bore which is in axis-parallel relationship with respect to the central bore and through which is passed an entrainment rod (49) which is prevented from moving axially.

5. Apparatus according to claim 4 characterised in that at each of its two ends the entrainment rod (49) is provided with a respective screwthreaded projection portion on to which nuts (52) are screwed for securing the rod in axis-parallel relationship.

6. Apparatus according to claim 4 and claim 5 characterised in that the entrainment rod (49) is formed from an outer tube (50) and a round bar (51) which has the screwthreaded projection portions and which is disposed within the outer tube (50) and that for positioning the chain wheels (40, 41, 42) which are not fixedly connected to the threshing drum shaft (32) the outer tube (50) is provided at defined locations with securing rings (53, 54) which are arranged in pairs and which are fitted into annular grooves.

7. Apparatus according to claim 6 characterised in that the outer tube (50) closingly engages with its end regions into recesses in the outer chain wheels (40, 41).

8. Apparatus according to claim 7 characterised in that the outer chain wheels (40, 41) are fixedly connected to the drive discs.

9. Apparatus according to one or more of the preceding claims characterised in that the chain wheels (42) have three through bores which are displaced through an angle of 120° and through which three entrainment rods (49) are passed.

## Revendications

1. Dispositif automoteur pour la récolte de produits délicats, par exemple pour la récolte de graines de ricin, équipé d'un mécanisme de battage qui se compose essentiellement d'un tambour batteur entraîné en rotation, à la périphérie duquel des barres profilées sont fixées sur des supports, avec un même espacement angulaire et parallèlement à l'axe de rotation du tambour batteur, et d'un contre-batteur qui est monté stationnaire au-dessous du tambour batteur et dont la face tournée vers le batteur est pourvue d'une garniture élastique, caractérisé par le fait que les barres profilées sont réalisées sous la forme de corps tubulaires souples (47) élastiques à section transversale essentiellement annulaire.

2. Dispositif selon la revendication 1, caractérisé par le fait que les corps tubulaires souples (47) élastiques s'étendent alternativement à partir de l'extrémité frontale gauche ou de l'extrémité frontale droite jusque dans la région médiane, les extrémités frontales libres des corps tubulaires souples (47) élastiques contigus, se chevauchant d'une faible valeur rapportée à leur longueur.

3. Dispositif selon la revendication 1, caractérisé par le fait que chaque support est formé essentiellement d'un pignon à chaîne (40, 41, 42) monté sur l'arbre du tambour batteur (32) et d'une chaîne à rouleaux (43) sans fin qui engrène sur la denture et par le fait que des équerres de fixation (45, 46) sont prévues sur la chaîne à rouleaux (43) pour fixer les corps tubulaires (47) souples élastiques.

4. Dispositif selon la revendication 3, caractérisé par le fait qu'au moins deux pignons à chaîne (40, 41, 42), de préférence les pignons à chaîne extérieurs (40, 41), sont liés rigidement à l'arbre du tambour batteur (32) et par le fait que tous les pignons à chaîne (40, 41, 42) sont pourvus d'au moins un trou débouchant parallèle au trou central dans lequel pénètre une tige d'entraînement (49) immobilisée dans la direction axiale.

5. Dispositif selon la revendication 4, caractérisé par le fait que la tige d'entraînement (49) est pourvue à chacune de ses deux extrémités d'un bout fileté sur lequel sont vissés des écrous (52) pour l'immobilisation dans la direction parallèle à l'axe.

6. Dispositif selon les revendications 4 et 5, caractérisé par le fait que la tige d'entraînement (49) est formée d'un tube extérieur (50) et d'une tige ronde (51) qui porte les bouts filetés et est disposée dans le tube extérieur (50) et par le fait que, pour positionner les pignons à chaîne (40, 41, 42) qui ne sont pas liés fermement au tambour batteur (32), le tube extérieur (50) est pourvu en des endroits déterminés de circlips (53, 54) qui sont disposés par paires dans des gorges annulaires.

7. Dispositif selon la revendication 6, caractérisé par le fait que le tube extérieur (50) s'engage par ses parties extrémales dans des évidements des pignons à chaîne extérieurs (40, 41).

8. Dispositif selon la revendication 7, caractérisé par le fait que les pignons à chaîne extérieurs (40, 41) sont liés rigidement aux flasques d'entraînement.

9. Dispositif selon une ou plusieurs des revendications précédentes, caractérisé par le fait que les pignons à chaîne (42) présentent trois trous traversants décalés d'un angle de 120°, dans lesquels pénètrent les trois tiges d'entraînement (49).
